# EUROPÄISCHE PATENTANMELDUNG

(11) **EP 4 502 745 A1**
(43) Veröffentlichungstag der Anmeldung: **05.02.2025**
(21) Anmeldenummer: 24173995.2
(22) Anmeldetag: 03.05.2024
(51) Int. Cl.: G05B 23/02

(54) **VERFAHREN ZUR BESTIMMUNG EINES ZUSTANDES EINES TECHNISCHEN SYSTEMS**

(30) Priorität: 04.08.2023 AT 506272023
(71) Anmelder: Uptime Holding GmbH, 8010 Graz (AT)
(72) Erfinder: Langmayr, Franz, 8010 Graz (AT)
(74) Vertreter: Wirnsberger & Lerchbaum Patentanwälte OG

(57) **Zusammenfassung**

Die Erfindung betrifft ein Verfahren zur Bestimmung eines Zustandes eines technischen Systems (S), wobei ein Verhalten des Systems (S) bei Beaufschlagung mit einer Last gemessen und dieses Verhalten zur Beurteilung eines Zustandes des Systems (S) herangezogen wird. Um eine Zustandsbeurteilung auf besonders einfache Weise zu ermöglichen, ist erfindungsgemäß vorgesehen, dass ein zeitlicher Verlauf des Verhaltens des Systems (S) und einer Vergleichsinstanz, welche zumindest ein, vorzugsweise mehrere, äquivalente Vergleichssysteme aufweist, gemessen wird, wonach eine Differenz zwischen dem Verhalten des Systems (S) und dem Verhalten der Vergleichsinstanz gebildet wird, wonach anhand der Differenz eine Zustandsbeurteilung des Systems (S) erfolgt.

## Beschreibung

Die Erfindung betrifft ein Verfahren zur Bestimmung eines Zustandes eines technischen Systems, wobei ein Verhalten des Systems bei Beaufschlagung mit einer Last gemessen und dieses Verhalten zur Beurteilung eines Zustandes des Systems herangezogen wird.

Verfahren zur Bestimmung eines Zustandes eines technischen Systems sind aus dem Stand der Technik bekannt geworden, insbesondere um eine erwartete Restlebensdauer abschätzen bzw. eine zustandsorientierte Wartung durchführen zu können. Bei Verfahren des Standes der Technik ist in aller Regel eine Instrumentierung der Systeme erforderlich, um einen Zustand beurteilen und eine Wartung rechtzeitig planen zu können, beispielsweise indem ein Verschleiß direkt erfasst, eine Verformung direkt gemessen oder eine oberflächliche Veränderung visuell beobachtet wird. Verfahren zur Zustandsbestimmung des Standes der Technik sind daher mit einem ungünstig großen Aufwand verbunden.

Hier setzt die Erfindung an. Aufgabe der Erfindung ist es, ein Verfahren der eingangs genannten Art anzugeben, welches mit besonders geringem Aufwand und somit erhöhter Effizienz umsetzbar ist.

Diese Aufgabe wird erfindungsgemäß durch ein Verfahren der eingangs genannten Art gelöst, bei welchem ein zeitlicher Verlauf des Verhaltens des Systems und einer Vergleichsinstanz, welche zumindest ein, vorzugsweise mehrere, äquivalente Vergleichssysteme aufweist, gemessen wird, wonach eine Differenz zwischen dem Verhalten des Systems und dem Verhalten der Vergleichsinstanz gebildet wird, wonach anhand der Differenz eine Zustandsbeurteilung des Systems erfolgt.

Im Rahmen der Erfindung wurde erkannt, dass durch einen Vergleich des Verhaltens des Systems mit einem Verhalten äquivalenter Systeme eine sehr einfach umsetzbare Zustandsbeurteilung möglich ist, zumal es insbesondere nicht erforderlich ist, ein SollVerhalten des Systems rechnerisch vorherzusagen und mit einem Ist-Verhalten zu vergleichen, was in vielen Fällen nicht oder nur mit sehr hohem Aufwand möglich ist und unter anderem eine genaue Erfassung der Belastung erfordert. Verglichen damit ist es bei Durchführung des erfindungsgemäßen Verfahrens nicht erforderlich, eine Belastung exakt zu kennen, solange gewährleistet ist, dass die Vergleichsinstanz im Wesentlichen gleich belastet wird. Dies kann insbesondere bei Vergleich des Systems mit gleichartigen Systemen, die gleichzeitig und durch dieselbe Beanspruchung belastet werden, beispielsweise zwei Schienen auf einer geraden Strecke eines Gleises oder Türen eines Zuges, die gleichzeitig geöffnet werden, leicht erreicht werden.

Es ist somit ausreichend, das Verhalten des Systems mit dem Verhalten vergleichbarer Systeme zu vergleichen, um beurteilen zu können, ob eine beispielsweise manuelle Überprüfung des Systems oder eine Wartung erforderlich sind oder sich das System gleich wie das eine oder mehrere Vergleichssysteme der Vergleichsinstanz verhält, also alles in Ordnung ist.

Üblicherweise ist vorgesehen, dass die Vergleichsinstanz zumindest ein Vergleichssystem aufweist, welches mit dem System baugleich ist. Beispielsweise kann somit zur Beurteilung einer Türe in einem Schienenfahrzeug das Verhalten der zu beurteilenden Türe mit dem Verhalten aller anderen Türen desselben Zuges verglichen werden, welche baugleich sind. Ergibt diese Beurteilung beispielsweise, dass die untersuchte Türe langsamer als die Vergleichstüren schließt oder einen höheren Energieaufwand bei einem Öffnen oder Schließen verursacht, kann daraus auf einen nicht ordnungsgemäßen Zustand geschlossen werden. Analog kann beispielsweise eine Abnutzung einer ersten Schiene eines Gleises mit einer Abnutzung einer zweiten Schiene desselben Gleises verglichen werden. Auch ohne exakter Kenntnis von Anzahl und Belastung der einzelnen Überfahrten kann aus einer ungleichen Abnutzung auf einen schlechteren Zustand geschlossen, eine Restlebensdauer abgeschätzt und gegebenenfalls ein zugrundeliegender Fehler, beispielsweise ein einseitig schlechteres Gleichbett, identifiziert werden.

Günstig ist es, wenn die Vergleichsinstanz zumindest ein Vergleichssystem aufweist, welches gleich und synchron wie das System belastet bzw. angesteuert wird. Somit sollte sich das System im Wesentlichen gleich wie das Vergleichssystem der Vergleichsinstanz verhalten, weswegen unmittelbar aus einer Differenz des Verhaltens zwischen dem System und dem Vergleichssystem der Vergleichsinstanz auf einen abweichenden Zustand geschlossen werden kann. Entsprechende gleiche und synchron wie das System belastete bzw. angesteuerte Vergleichssysteme können beispielsweise Bremsen an Achsen eines Schienenfahrzeuges sein, welche stets gleichzeitig und mit derselben Intensität angesteuert werden. Wenn eine dieser Bremsen eine höhere Temperatur als die Vergleichssysteme aufweist oder eine größere Zeitspanne für eine Bewegung aus der bzw. in die Nulllage benötigt, kann dies als Indikator für einen von einem Normalzustand abweichenden Zustand dieser Bremse herangezogen werden.

Es kann jedoch auch vorteilhaft sein, wenn die Vergleichsinstanz zumindest ein Vergleichssystem aufweist, welches gleich wie das System und asynchron zum System belastet bzw. angesteuert wird. Beispielhaft kann somit der Zustand eines Kompressors in einem Zug anhand eines gleichartigen Kompressors in einer anderen Zuginstanz beurteilt werden, welcher andere Kompressor in gleicher Intensität und Frequenz, jedoch zu anderen Zeitpunkten angesteuert wird. Der Abgleich des Verhaltens der beiden Systeme kann dann über die unterschiedlichen Zeitpunkte, zu welchen die Ansteuerung erfolgt, leicht erfolgen.

Günstig ist es, wenn ein digitales Modell des Systems erstellt wird, insbesondere durch Erstellung eines digitalen Zwillings, und das Verhalten des Systems bei Wirkung von Schädigungsmechanismen durch Simulation am digitalen Modell, insbesondere am digitalen Zwilling, ermittelt wird. Auf diese Weise ist es nicht nur möglich, zu beurteilen, ob der Zustand des Systems in Ordnung ist oder nicht, sondern kann darüber hinaus auch festgestellt werden, ob und gegebenenfalls welcher Schädigungsmechanismus am System wirkt. In aller Regel kann durch Systemanalyse zuverlässig prognostiziert werden, welcher Schädigungsmechanismus an dem jeweiligen System wirken könnte. Wie sich dieser Schädigungsmechanismus auf das System auswirken wird, kann am digitalen Zwilling rechnerisch ermittelt werden. Beispielsweise kann so am digitalen Zwilling ermittelt werden, wie sich das System verhält, wenn der Schädigungsmechanismus abrasiver Verschleiß auf ein bestimmtes Element des Systems oder auf mehrere Elemente wirkt, und eine Differenz des Verhaltens des Systems zum Verhalten des Vergleichssystems bzw. der Vergleichsinstanz in Bezug auf eine Ähnlichkeit mit dem errechneten Verhalten bei abrasivem Verschleiß geprüft werden. Entspricht das bei abrasivem Verschleiß erwartete Verhalten der Differenz zwischen dem zu überprüfenden System und dem Vergleichssystem, kann somit geschlussfolgert werden, dass am untersuchten System der Schädigungsmechanismus abrasiver Verschleiß wirkt, während dieser am Vergleichssystem nicht wirkt. Basierend darauf kann eine Wartung präzise geplant werden, bevor es zu einem Versagen kommt.

Günstig ist es, wenn eine Zustandsbeurteilung erfolgt, indem ein zeitlicher Verlauf der Differenz mit zeitlichen Verläufen von Auswirkungen möglicher Schädigungsmechanismen abgeglichen und basierend darauf ein wirkender Schädigungsmechanismus identifiziert wird. Auf diese Weise kann eine zustandsbasierte Wartung besonders genau in der Weise geplant werden, dass weder zu früh gewartet wird, noch so spät, dass bereits ein Bauteilversagen eintritt. So kann bei Identifikation eines Schädigungsmechanismus in aller Regel vergleichsweise gut vorhergesagt werden, wie lange das System noch ohne Versagen funktionieren kann, sodass die Wartung entsprechend gut geplant werden kann.

Günstig ist es, wenn der zeitliche Verlauf der Differenz mit zeitlichen Verläufen von Auswirkungen von einem oder mehreren der in der folgenden Liste angeführten Schädigungsmechanismen abgeglichen wird:
- chemische Alterung;
- elektrische Alterung;
- thermische Alterung;
- Kavitation;
- Korrosion, im Sinne von Reaktion eines Werkstoffs mit seiner Umgebung;
- elektrochemische Korrosion;
- Korrosion aufgrund eines heißen Gases;
- Risswachstum in korrosiver Umgebung;
- Kriechen;
- Ablösung;
- Ablagerung;
- Verzug;
- Ermüdung aufgrund von High Cycle Fatigue;
- Ermüdung aufgrund von Low Cycle Fatigue;
- thermomechanische Ermüdung;
- Eisbildung;
- elektrische Überlastung;
- mechanische Überlastung;
- thermische Überlastung;
- Oxidation;
- abrasiver Verschleiß;
- adhäsiver Verschleiß;
- erosiver Verschleiß;
- Verschleiß durch Fretting;
- hydrodynamischer Verschleiß;
- Verschleiß durch Fressen;
- Graufleckigkeit.

Als chemische Alterung wird üblicherweise die Änderung der chemischen und physikalischen Struktur, zumeist bezogen auf Polymere verstanden.

Als elektrische Alterung wird die Formierung von Leerstellen und Mikrorissen in einem Dielektrikum durch Kräfte im elektrischen Feld üblicherweise verstanden.

Als thermische Alterung wird üblicherweise die in der Regel langzeit-irreversible Änderungen einer Struktur, Zusammensetzung und Morphologie von Materialien, die Temperaturen ausgesetzt sind verstanden.

Als Kavitation wird üblicherweise verstanden, dass der statische Druck die lokale Dampfdruckgrenze unterschreitet, was zur Dampfblasenbildung führt, gefolgt von einer Dampfblasen-Implosion und Strahlenbildung die zur Erosion führen kann.

Als Korrosion wird üblicherweise die Reaktion eines Werkstoffs mit seiner Umgebung verstanden, die eine Umwandlung in eine messbare Veränderung des Werkstoffs, üblicherweise zu einem stabileren Oxid, bewirkt.

Als elektrochemische Korrosion wird üblicherweise die Oxidation aufgrund von Stromfluss verstanden.

Als Korrosion aufgrund eines heißen Gases wird üblicherweise die Art von beschleunigter Oxidation von Oberflächen verstanden, die hohen Gastemperaturen ausgesetzt sind; wobei Gase mit Schwefel oder Alkalimetallen kontaminiert werden.

Als Risswachstum in korrosiver Umgebung wird üblicherweise das Risswachstum in einer korrosiven Umgebung verstanden.

Als Kriechen wird üblicherweise eine zeit- und temperaturabhängige viskoelastische oder plastische Verformung unter konstanter Last verstanden.
Als Ablösung wird üblicherweise das Ablösen von Bauteilschichten verstanden.

Als Ablagerung wird üblicherweise eine Ablagerungsbildung (reversibel oder irreversibel) verstanden.

Als Verzug wird üblicherweise eine dauerhafte strukturelle Verformung verstanden.

Als Ermüdung aufgrund von High Cycle Fatigue (HCF) wird üblicherweise eine Rissinitiierung und -fortsetzung unter Lastwechselbeanspruchung verstanden.

Als Ermüdung aufgrund von Low Cycle Fatigue (LCF) wird üblicherweise eine Ermüdung aufgrund zyklischer plastischer Verformung verstanden.

Als thermomechanische Ermüdung wird üblicherweise eine LCF-Ermüdung verstanden, bei der die plastische Verformung durch Temperaturzyklierung verursacht wird.

Als Einfrieren wird üblicherweise eine Eisbildung verstanden.

Als elektrische Überlastung wird üblicherweise eine hohe elektrische Belastung über der zulässigen Maximallast verstanden.

Als mechanische Überlastung wird üblicherweise eine hohe mechanische Belastung über der zulässigen Maximallast verstanden.

Als thermische Überlastung wird üblicherweise eine hohe thermische Last über der zulässigen Maximallast verstanden.

Als Oxidation wird üblicherweise ein Verlust von Elektronen oder ein Anstieg des Oxidationszustands verstanden.

Als abrasiver Verschleiß wird üblicherweise ein Materialverlust aus der Oberfläche eines festen Körpers verstanden, hervorgerufen durch mechanische Ursachen, also durch Kontakt und Relativbewegung mit einem festen Gegenkörper.

Als adhäsiver Verschleiß wird üblicherweise ein Abscheren von Randschichtteilchen bei Relativbewegung nach vorhergehender Bildung einer adhäsiven Verbindung verstanden.

Als erosiver Verschleiß wird üblicherweise ein Materialverlust aus der Oberfläche eines festen Körpers verstanden, hervorgerufen durch den Aufprall von festen oder flüssigen Partikeln auf die Oberfläche eines Gegenstandes.

Als Verschleiß durch Fretting wird üblicherweise Reibrost aufgrund von Reibbewegungen im hochbelasteten Kontakt zweier Bauteile verstanden.

Als hydrodynamischer Verschleiß wird üblicherweise ein Verschleiß aufgrund von lokaler Mangelschmierung und Spitze-Spitze Kontakten verstanden.

Als Verschleiß durch Fressen wird üblicherweise eine Mikroverschweißungen (z. B. aufgrund von Mangelschmierungen) mit anschließendem Materialabtrag verstanden.

Als Graufleckigkeit wird üblicherweise eine Verschleißerscheinung oberflächennaher Bereiche hochbelasteter metallischer Bauteile verstanden, beispielsweise an Zahnrädern.

Zu diesen Schädigungsmechanismen sind aus der Literatur zeitliche Verläufe bekannt, welche mit einer im erfindungsgemäßen Verfahren erfassten Differenz von einem Verhalten des Systems mit einem Verhalten von Systemen der Vergleichsinstanz abgeglichen werden können, um auf einfache Weise einen am System, jedoch nicht an der Vergleichsinstanz, wirkenden Schädigungsmechanismus zu identifizieren.

Günstig ist es, wenn Wahrscheinlichkeiten, mit welchen mögliche Schädigungsmechanismen bei dem System wirken, analysiert werden und der zeitliche Verlauf der Differenz nur mit zeitlichen Verläufen von Auswirkungen von einem oder mehreren Schädigungsmechanismen abgeglichen wird, welche mit einer eine vordefinierte Schwellwahrscheinlichkeit überschreitenden Wahrscheinlichkeit wirken. Auf diese Weise wird eine wesentlich bessere Zustandsbeurteilung ermöglicht, zumal Schädigungsmechanismen, die möglicherweise einen ähnlichen Verlauf in der Differenz des Verhaltens zwischen dem System und den Vergleichssystemen bewirken würden, jedoch unwahrscheinlich sind, ausgeschlossen werden können, sodass die im bevorzugt automatisiert durchgeführten Verfahren ermittelten Schädigungsmechanismen auch mit hoher Wahrscheinlichkeit die tatsächlich wirkenden Schädigungsmechanismen sind.

Bevorzugt ist vorgesehen, dass in Bezug auf die einzelnen Schädigungsmechanismen Treiber identifiziert werden und Wahrscheinlichkeiten, mit welchen die einzelnen Schädigungsmechanismen wirken, anhand erwarteter Intensitäten beurteilt werden, mit welcher die Treiber bei einem Betrieb des Systems wirken. Beispielsweise kann eine Wahrscheinlichkeit des Schädigungsmechanismus chemische Korrosion als sehr gering beurteilt werden, wenn bei einem Betrieb des Systems der Treiber der chemischen Korrosion, eine chemisch aggressive Umgebung, nicht oder nur mit verschwindend geringer Wahrscheinlichkeit vorhanden ist. Somit können Informationen über einen erwarteten Betrieb des Systems in eine Beurteilung einer Wahrscheinlichkeit, dass bestimmte Schädigungsmechanismen auftreten, einfließen, wodurch eine Zustandsbeurteilung mit besonders hoher Genauigkeit ermöglicht wird.

Günstig ist es, wenn bei Messung des Verhaltens physikalische Größen des Systems und der Vergleichsinstanz gemessen werden, anhand welcher beurteilbar ist, ob Schädigungsmechanismen wirken. Das Verhalten des Systems ist somit anhand von physikalischen, messbaren Größen messbar. Beispielsweise können Ströme, Verformungen, Spannungen, Gewichtsveränderungen und dergleichen gemessen werden, um ein Verhalten des Systems zu erfassen, über welches Verhalten anhand der bekannten Auswirkung von unterschiedlichen Schädigungsmechanismen auf das System, welche beispielsweise im Rahmen von Simulationen ermittelt werden können, auf wirkende Schädigungsmechanismen geschlossen werden kann.

In dem Zusammenhang ist es besonders günstig, wenn in Bezug auf einzelne Schädigungsmechanismen, insbesondere jene Schädigungsmechanismen, welche mit einer eine vordefinierte Schwellwahrscheinlichkeit überschreitenden Wahrscheinlichkeit wirken, beobachtbare Indikatoren, insbesondere physikalische, messbare Größen, identifiziert werden und diese Indikatoren gemessen werden, um das Verhalten des Systems und der Vergleichsinstanz zu messen.

Beispielsweise kann ein Schädigungsmechanismus Lochfraß getrieben werden durch eine Zeitdauer einer Taupunktsunterschreitung und kann ein Indikator für ein Fortschreiten eines Lochfraßes bei einem Druckluftsystem beispielsweise eine Reduktion des Druckgradienten bei der Kompression sein. Somit ergibt die Identifikation des Indikators Reduktion des Druckgradienten bei der Kompression für den Schädigungsmechanismus Lochfraß, dass zur Beurteilung, ob der Schädigungsmechanismus aktiv ist, der Druckgradient bzw. der Verlauf des Druckes bei der Kompression gemessen werden sollte.

Es kann auch der Fall eintreten, dass eine direkte Messung des unmittelbaren Ergebnisses des Schädigungsmechanismus nicht möglich ist, jedoch die Erfassung von Ersatzgrößen. In dem Fall können auch Ersatzgrößen als Indikatoren gemessen werden. So kann beispielsweise der Fall eintreten, dass für die Beurteilung, ob ein bestimmter Schädigungsmechanismus wirkt, eine Motortemperatur eines Elektromotors als Indikator herangezogen werden könnte, jedoch die Motortemperatur selbst nicht gemessen wird, da keine Sensoren hierfür vorgesehen sind. Wird jedoch der Motorstrom gemessen, kann dieser als Ersatzgröße für die Motortemperatur herangezogen werden, zumal eine bekannte Korrelation zwischen der Motortemperatur und dem Motorstrom besteht.

Bevorzugt ist vorgesehen, dass anhand der erfolgten Zustandsbeurteilung und einer ermittelten Zustandsveränderung ein zukünftiges Verhalten prognostiziert wird. So weisen bekannte Schädigungsmechanismen einen bekannten Schädigungsverlauf, üblicherweise abhängig von Zeit und/oder Beanspruchung auf, sodass bei bekanntem Schädigungsmechanismus und bekannter Belastung gut prognostizierbar ist, wie sich das System in weiterer Folge verhalten wird bzw. wann ein Systemversagen eintreten würde, sodass eine Wartung basierend darauf geplant werden kann.

Entsprechend ist bevorzugt vorgesehen, dass anhand der erfolgten Zustandsbeurteilung eine Wartung geplant wird.

Üblicherweise ist vorgesehen, dass die Wartung eines technischen Systems basierend auf einer erfindungsgemäß ermittelten Zustandsbeurteilung geplant und durchgeführt wird.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 ein Flussdiagramm eines erfindungsgemäßen Verfahrens zur Bestimmung eines Zustandes eines Systems;
Fig. 2 ein Ergebnis einer Analyse eines Systems in Bezug auf mögliche Schädigungsmechanismen sowie Treiber und Indikatoren derselben.

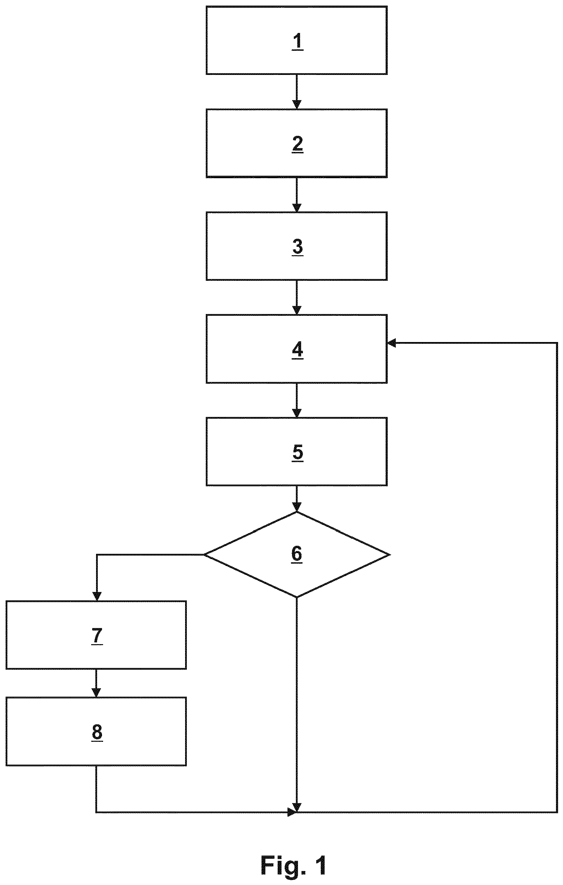

Fig. 1 zeigt ein Flussdiagramm eines erfindungsgemäßen Verfahrens. Dabei werden in einem ersten Schritt 1 Schädigungsmechanismen identifiziert, welche am System S wirken können und somit für das Systemverhalten relevant sein könnten.

Hierzu wird üblicherweise in Bezug auf einige, vorzugsweise alle, Schädigungsmechanismen SM aus der Liste:
- chemische Alterung;
- elektrische Alterung;
- thermische Alterung;
- Kavitation;
- Korrosion, im Sinne von Reaktion eines Werkstoffs mit seiner Umgebung;
- elektrochemische Korrosion;
- Korrosion aufgrund eines heißen Gases;
- Risswachstum in korrosiver Umgebung;
- Kriechen;
- Ablösung;
- Ablagerung;
- Verzug;
- Ermüdung aufgrund von High Cycle Fatigue;
- Ermüdung aufgrund von Low Cycle Fatigue;
- thermomechanische Ermüdung;
- Eisbildung;
- elektrische Überlastung;
- mechanische Überlastung;
- thermische Überlastung;
- Oxidation;
- abrasiver Verschleiß;
- adhäsiver Verschleiß;
- erosiver Verschleiß;
- Verschleiß durch Fretting;
- hydrodynamischer Verschleiß;
- Verschleiß durch Fressen;
- Graufleckigkeit.

geprüft, ob Treiber T dieser Schädigungsmechanismen SM bei einem Betrieb des Systems S auftreten könnten. Falls die Treiber T mit einer eine vordefinierte Schwellwahrscheinlichkeit überschreitenden Wahrscheinlichkeit auf das System S wirken, kann auch angenommen werden, dass der Schädigungsmechanismus SM mit einer entsprechenden Wahrscheinlichkeit wirken wird und somit für das Systemverhalten relevant ist. Auf diese Weise können somit Schädigungsmechanismen sofort ausgeschlossen werden, welche aufgrund der Einsatzbedingungen völlig unwahrscheinlich sind, beispielsweise Kavitation bei einer Schiene eines Gleises. Die Schwellwahrscheinlichkeit für die Beurteilung, ob ein Schädigungsmechanismus SM relevant ist, kann beispielsweise bei einer Eintrittswahrscheinlichkeit von 1 % liegen.

In einem zweiten Schritt 2 wird ein Modell des Systems S gebildet, insbesondere ein digitaler Zwilling, welches Modell in aller Regel zumindest einen derartig hohen Detaillierungsgrad aufweist, dass für die im ersten Verfahrensschritt als relevant ermittelten Schädigungsmechanismen SM Schädigungseffekte SE auf einzelne Komponenten C und Auswirkungen auf das Systemverhalten bei Eintritt des Schädigungsmechanismus SM abgeleitet werden können. Insbesondere kann die Bildung eines Modells eine Bildung eines Finite-Elemente-Netzes des Systems oder von Teilen bzw. Komponenten C desselben, eine Erstellung eines analytischen Modells des Systems oder von Teilen bzw. Komponenten C desselben oder dergleichen beinhalten, sodass mechanische, elektrische und/oder chemische Auswirkungen von einem der als relevant identifizierten Schädigungsmechanismen SM, welcher an einem oder mehreren Komponenten C des Systems wirkt, auf das Verhalten des Systems C beurteilt werden können.

In einem dritten Schritt 3 werden rechnerisch Auswirkungen der einzelnen, als relevant identifizierten Schädigungsmechanismen auf das Verhalten des Systems analysiert. Hierzu werden die für das Auftreten von Schädigungsmechanismen SM gefährdeten Elemente bzw. Komponenten C des Systems rechnerisch dem Schädigungsmechanismus SM ausgesetzt und das Verhalten des Modells beurteilt, was beispielsweise konkrete Schädigungseffekte SE an einzelnen Komponenten ergeben kann, die aufgrund des jeweiligen Schädigungseffektes auftreten. Im Rahmen dieses dritten Schrittes 3 können somit auch jene Observablen O identifiziert werden, welche für die Beurteilung, ob ein Schädigungsmechanismus SM aktiv ist und zu einem Schädigungseffekt SE führt, herangezogen werden können und folglich am realen System S überwacht werden sollten. Dies kann beispielsweise ein Druckgradient, eine Batteriekapazität, ein Strom, eine Spannung oder eine andere physikalische oder chemische Größe sein.

In einem vierten Schritt 4 wird das Verhalten des Systems S und das Verhalten von Systemen einer Vergleichsinstanz beobachtet, insbesondere anhand der im dritten Schritt 3 ermittelten Observablen O. Die gemessenen Observablen O können beispielsweise Drücke, Temperaturen, Ströme, Verformungen und dergleichen sein.

Beispielsweise könnte eine für die Beurteilung, ob eine Tür eines Zuges in Ordnung ist, relevante und zu messende Observable O eine Zeit sein, welche die entsprechende Türe für einen Schließvorgang benötigt. Diese Zeit kann an der interessierenden Türe sowie an den weiteren Türen desselben Zuges, welche gleichzeitig betätigt werden, gemessen werden. Der zeitliche Verlauf der Zeit, welche die interessierende Türe für einen Schließvorgang benötigt, kann dann mit dem zeitlichen Verlauf der Zeit, welche die weiteren Türen des Zuges, also die Vergleichssysteme der Vergleichsinstanz, für den Schließvorgang im Mittel benötigen, verglichen werden, um eine Aussage über den Zustand der interessierenden Türe zu erhalten, selbst wenn keine exakten Daten über die Anzahl der Schließvorgänge vorliegt.

In einem fünften Verfahrensschritt wird daher eine Differenz zwischen einem im dritten Schritt gemessenen zeitlichen Verlauf eines Verhaltens des Systems und einem zeitlichen Verlauf eines Verhaltens der Vergleichsinstanz, also einem Mittelwert aller Vergleichssysteme, welche in der Vergleichsinstanz enthalten sind, ermittelt.

In einem fünften Verfahrensschritt 5 wird anhand dieser Differenz bzw. eines zeitlichen Verlaufs der Differenz zwischen dem Verhalten des Systems S und dem Verhalten der Vergleichsinstanz, beurteilt, ob und gegebenenfalls welche Schädigungsmechanismen wirken und dieses Verhalten des Systems auslösen. Hierzu wird der zeitliche Verlauf der Differenz mit den am Modell ermittelten zeitlichen Verläufen der Auswirkungen der einzelnen Schädigungsmechanismen abgeglichen, um ähnlich einer Mustererkennung über den Verlauf den wirkenden Schädigungsmechanismus zu identifizieren.

Beispielsweise kann ein Schaden an einem Lager einer Türe eines Zuges aufgrund von abrasivem Verschleiß eine über die Zeit progressiv zunehmende Schließdauer der Türe zur Folge haben, was sich aus der im dritten Schritt durchgeführten Berechnung bzw. Simulation am Modell ergibt. Wenn die anderen, infrage kommenden Schädigungsmechanismen SM eine lineare oder degressive Zunahme der Schließdauer zur Folge haben, kann somit aus einem progressivem Verlauf der Differenz der Schließdauer der beobachteten Türe im Vergleich mit den weiteren Türen des Zuges, welche die Vergleichsinstanz bilden, auf einen Lagerschaden an der Türe aufgrund von aufgrund von abrasivem Verschleiß geschlossen und gegebenenfalls eine Restlebensdauer prognostiziert werden, basierend auf welcher die Wartung geplant und durchgeführt werden kann.

Auf diese Weise wird im fünften Verfahrensschritt 5 somit ein gegebenenfalls wirkender Schädigungsmechanismus SM identifiziert, welcher in weiterer Folge dazu genutzt werden kann eine Restlebensdauer zu prognostizieren bzw. eine Wartung zu planen.

In einem sechsten Verfahrensschritt 6 wird dann basierend auf dem im fünften Verfahrensschritt 5 ermittelten wirkenden Schädigungsmechanismus SM entschieden, ob eine Wartung bzw. Reparatur durchzuführen ist.

Ergibt die Entscheidung im sechsten Verfahrensschritt 6, dass eine Wartung bzw. Reparatur erforderlich ist, wird diese in einem siebenten Verfahrensschritt 7 geplant, wobei gegebenenfalls eine Restlebensdauer des entsprechenden Bauteiles prognostiziert werden kann, um eine Priorisierung vornehmen zu können.

In einem achten Verfahrensschritt 8 wird die Wartung schließlich gemäß der Planung im siebenten Verfahrensschritt durchgeführt, wonach der Systemzustand wieder überwacht und mit dem Zustand der Vergleichsinstanz verglichen wird.

Ergibt der fünfte Verfahrensschritt 5, dass kein Schädigungsmechanismus wirkt oder eine Schädigung so gering ist, dass keine Wartung oder Reparatur erforderlich ist, wird keine Wartung oder Reparatur durchgeführt, sondern lediglich der Systemzustand wieder überwacht und mit dem Zustand der Vergleichsinstanz verglichen.

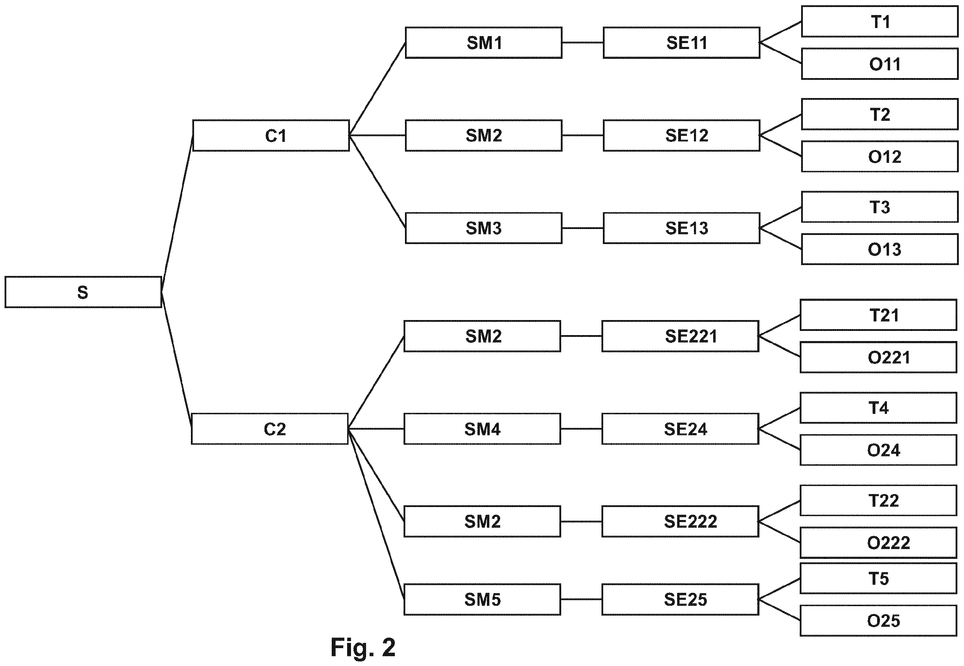

Fig. 2 zeigt beispielhaft ein Ergebnis einer Systemanalyse eines zu beurteilenden Systems S, welches ein Ergebnis der Schritte 1 bis 3 des in Fig. 1 dargestellten Verfahrens sein kann. Wie ersichtlich weist das System S mehrere Komponenten C1, C2 auf. Den Komponenten C1, C2 sind mögliche Schädigungsmechanismen SM1, SM2, SM3, SM4, zugeordnet, welche konkreten Schäden bzw. Effekte der Schädigungsmechanismen oder Schädigungseffekte SE11, SE12, SE13, SE21, SE24, SE23, zur Folge haben, welchen Schädigungseffekten SE11, SE12, SE13, SE21, SE24, SE23 wiederum einerseits Treiber T1, F2, T3, T4, zugeordnet sind, welche für das Eintreten des jeweiligen Schädigungsmechanismus SM1, SM2, SM3, SM4 ursächlich sind, und andererseits beobachtbare Indikatoren bzw. Observablen O11, O12, O13, O21, O24, O25, anhand welcher feststellbar ist, ob der Schädigungsmechanismus SM1, SM2, SM3, SM4 an der jeweiligen Komponente C1, C2 wirkt und zu einem Fortschreiten des Schädigungseffektes SE11, SE12, SE13, SE21, SE24, SE23 führt.

Beispielsweise kann bei einem Druckluftsystem C1 der Schädigungsmechanismus Korrosion SM1 wirken, welcher sich konkret als Lochfraß SE11 bemerkbar macht. Dieser Schädigungsmechanismus kann getrieben werden durch eine Zeitdauer einer Taupunktsunterschreitung T1 und durch eine Reduktion eines Druckgradienten bei einer Kompression O11 beobachtet werden.

Eine weiterer möglicher Schädigungsmechanismus bei dem Druckluftsystem C1 könnte LCF-Ermüdung bzw. Low Cycle Fatigue SM2 sein, welche zu einer Rissbildung durch eine Druckzyklierung SE12 führt. Diese Schädigung SE12 wird getrieben durch eine Druckzyklierung bei hohem Druckniveau als Treiber T2 und könnte ebenfalls durch einen Druckgradienten bei der Kompression 012 als Observable beobachtet werden, welcher Druckgradient reduziert ist. Die unterschiedlichen Schädigungsmechanismen können somit gegebenenfalls durch dieselben Observablen beobachtet werden.

Ein weiterer möglicher Schädigungsmechanismus bei einem Druckluftsystem C1 könnte ein abrasiver Verschleiß SM3 sein, welcher eine Schraubenrotation bei Mischreibung als Schädigungseffekt SE12 bewirkt. Dieser Schädigungsmechanismus SM12 wird getrieben durch die Starts als Treiber T3 und kann ebenfalls durch eine Reduktion des Druckgradienten bei der Kompression als Observable 013 beobachtet werden.

Die bloße Beobachtung eines Druckgradienten bei der Kompression O11=O12=O13 erlaubt somit allein noch nicht die Bestimmung eines wirkenden Schädigungsmechanismus SM1, SM2, SM3. Durch Vergleich des zeitlichen Verlaufes der Reduktion des Druckgradienten O11=O12=O13 bei der Kompression des Systems mit entsprechenden Vergleichssystemen, welche gleich aufgebaut sind und im Wesentlichen analog, synchron oder asynchron, belastet werden, kann jedoch ein zeitlicher Verlauf dieser Reduktion bestimmt werden, welcher beispielsweise symptomatisch für einen konkreten Schädigungsmechanismus wie den Lochfraß SM11 sein kann. Beispielsweise kann durch den Lochfraß der Druckgradient O11=O12=O13 mit der Zeit progressiv abnehmen, was sich aus einer Simulation ergeben kann.

Somit kann durch bloße Messung des Druckgradienten am System sowie parallel an Vergleichssystemen einer Vergleichsinstanz aufgrund der für Lochfraß symptomatischen progressiven Abnahme des Druckgradienten beim System verglichen mit den Systemen der Vergleichsinstanz ermittelt werden, dass beispielsweise der Schädigungsmechanismus Lochfraß wirkt und ein zeitlicher Verlauf dieses Schädigungsmechanismus, welcher aus der Literatur hinlänglich bekannt ist, dazu genutzt werden, um eine verbleibende Zeit bis zu einer erforderlichen Wartung zu ermitteln, anhand welcher die Wartung geplant wird. Aufgrund des Vergleiches des Systemverhaltens mit dem Verhalten von Vergleichssystemen der Vergleichsinstanz ist die Beurteilung des Schädigungsmechanismus insbesondere möglich, ohne dass Informationen zu einem Sollverhalten des Systems überhaupt vorliegen, wodurch eine Zustandsbeurteilung einerseits mit hoher Qualität und andererseits auch mit besonders geringem Aufwand möglich ist.

Die weitere Komponente C2 des Systems S kann beispielsweise eine Li-Ion-Batterie sein, an welcher die Schädigungsmechanismen LCF-Ermüdung SM2, Verformung SM3 und Ablagerung SM5 wirken, welche wiederum konkrete Schädigungseffekte SE221, SE24, SE222 und SE25 zur Folge haben, denen Treiber T21, T4, T22 und T5 zugeordnet sind.

Wie hier ersichtlich kann der Schädigungsmechanismus LCF-Ermüdung an derselben Komponente C2 unterschiedliche Schädigungseffekte haben, nämlich beispielsweise einerseits eine Rissbildung durch zyklische Dehnungsgradienten in den Kathoden als ersten Schädigungseffekt SE221 und eine Lösung von Kontakten durch Vibrationsbelastung als zweiten Schädigungseffekt SE222.

Der erste Schädigungseffekt SE221 kann dabei durch hohe Stromdichte bei niedriger Temperatur als erstem Treiber T21 und der zweite Schädigungseffekt SE222 durch Vibration und Schlagbelastung T22 getrieben werden. Die Observablen für die Schädigungseffekte SE221 und SE222 können ebenfalls unterschiedlich sein, nämlich beispielsweise einerseits abnehmende Kapazität der Batterie einerseits als erste Observable 0221 und andererseits über eine intermittierende Spannung als Observable O222.

Ein Schädigungsmechanismus wie hier die LCF-Ermüdung kann damit unterschiedliche Schädigungseffekte SE221 und SE222 haben und durch unterschiedliche Treiber T21 und T22 getrieben und durch unterschiedliche Observable 0221 und O222 beobachtbar sein.

Gleichzeitig können unterschiedliche Schädigungseffekte durch dieselben Treiber getrieben werden und durch dieselben Observablen beobachtet werden.

Beispielsweise könnte der Schädigungsmechanismus Verformung SM4 zum Schädigungseffekt Rissbildung durch zyklische Dehnung der Elektroden SE24 führen, welcher durch eine Tiefentladung oder volle Ladung der Batterie als Treiber T4 getrieben wird und durch die Observable abnehmende Kapazität der Batterie O24=O221 beobachtbar ist. Diese Zusammenhänge ergeben sich üblicherweise durch eine Modellbildung des Systems sowie die rechnerische Beaufschlagung des Modells mit den bekannten Schädigungsmechanismen, welcher aus der vorstehenden Liste entsprechend möglicher Auftretenswahrscheinlichkeiten ausgewählt werden, sodass die zeitlichen Verläufe der Differenzen zwischen den beobachteten Observablen am System und den zeitlichen Verläufen der Observablen an der Vergleichsinstanz nicht den zeitlichen Verläufen aller möglichen 27 Schädigungsmechanismen gegenübergestellt werden müssen, um den wirkenden Schädigungsmechanismus zu identifizieren, sondern nur jenen, welche mit einer bestimmten Wahrscheinlichkeit wirken.

Als Vergleichsinstanz werden üblicherweise äquivalente Vergleichssysteme herangezogen. Diese können ident beanspruchte baugleiche Systeme oder asynchron beanspruchte ähnliche Systeme sein, sodass anhand des Verhaltens der Vergleichsinstanz ein tatsächliches Sollverhalten des Systems ermittelt werden kann, gegenüber welchem Abweichungen dann leicht identifiziert werden können. Eine rechnerische Ermittlung eines Soll-Verhaltens ist in vielen Fällen nicht möglich, zumal zu viele Einflussfaktoren vorhanden sind, die zudem nicht oder nicht vollständig bekannt sind.

Weitere mögliche Kombinationen für Komponenten, die den Komponenten zugeordneten Schädigungsmechanismen sowie die durch die Schädigungsmechanismen bewirkten Schädigungseffekte, deren Treiber und beobachtbare Indikatoren der Schädigungseffekte bzw. Observable, welche zur Beurteilung, ob der Schädigungsmechanismus aktiv ist, herangezogen werden können, ergeben sich aus den folgenden Tabellen:

| Komponente C | Schädigungsmechanismus SM | Schädigungseffekt SE | Treiber der Schädigung T | beobachtbare Indikatoren bzw. Observable t7 |
|---|---|---|---|---|
| Druckluftsystem | Korrosion | Lochfraß | Zeitdauer der Taupunktsunterschreitung | Reduktion des Druckgradienten bei der Kompression |
| | Ermüdung LCF | Rissbildung durch Druckzyklierung | Druckzyklierung bei hohem Druckniveau | Reduktion des Druckgradienten bei der Kompression |
| | Verschleiß, abrasiv | Schraubenrotation bei Mischreibung | Start | Reduktion des Druckgradienten bei der Kompression |

| | | | | |
|---|---|---|---|---|
| Gleitlager | Verschleiß, abrasiv | Mischreibung durch Kollaps des hydrodynamischen Schmierfilms | hohe Lagerlast, niedrige Drehzahl und hohe Öltemperatur | progressive Lager-Erwärmung |
| | Kavitation | Impuls-Transfer durch Kollaps von Gasblasen an der Lager-Oberfläche | hohe Druckgradienten und hohe Öltemperatur | Öldruckfluktuation, reduzierter Massendurchsatz |
| | Erosion | Abrasion durch Partikelfracht im Schmieröl | hohe Fließgeschwindigkeit | Reduktion des Öldrucks durch steigende Leckage |

| | | | | |
|---|---|---|---|---|
| Li-Ion Batterie | Ermüdung HCF | Rissbildung durch Spannungszyklierung | Hochlastbetrieb | Kollaps des Öldrucks nach Deformation infolge Anriss |
| | Ermüdung LCF | Rissbildung durch zyklische Dehnungsgradienten in den Kathoden | hohe Stromdichte bei niedriger Temperatur | abnehmende Kapazität der Batterie |
| | Verformung | Rissbildung durch zyklische Dehnung der Elektroden | Tiefentladung, volle Ladung | abnehmende Kapazität der Batterie |
| | Ablagerung | Li-Schichtbildung durch Sprungstelle im el. Widerstand | hohe Stromdichte bei niedriger Temperatur | abnehmende Kapazität der Batterie, steigender Innenwiderstand |
| | Ermüdung LCF | Kontakte lösen sich durch Vibrationsbelastung | Vibration, Schlagbelastung | intermittierende Spannung |

| Komponente C | Schädigungsmechanismus SM | Schädigungseffekt SE | Treiber der Schädigung T | beobachtbare Indikatoren bzw. Observable O |
|---|---|---|---|---|
| PM SM Motor | Ermüdung HCF | Rissbildung durch Spannungszyklierung | Hochlastbetrieb | Kollaps des Öldrucks nach Deformation infolge Anriss |
| | Überlastung, thermisch | Entmagnetisierung der Rotor-Magnete | Hochlast-Start, Hochlast bei niedriger Drehzahl | Leistungsverlust |
| | Alterung, thermisch | Alterung der Wicklungs-Isolation | hohe Stator-Stromdichten | Erwärmung der Wicklung, Strom-Fluktuation |
| | Ermüdung TMF | Rissbildung der Wicklungs-Isolation durch zyklische Dehnung | Leistungsgradienten | Erwärmung der Wicklung, Strom-Fluktuation |
| | Verschleiß, Reibrost | Verdrehung des Blechpakets gegen die RotorWelle | Drehmoment-Gradienten | Erwärmung der Wicklung, Leistungsverlust |

| | | | | |
|---|---|---|---|---|
| Schmieröl | Ermüdung HCF | Rissbildung durch Spannungszyklierung | Hochlastbetrieb | Kollaps des Öldrucks nach Deformation infolge Anriss |
| | Überlastung, thermisch | volatile Anteile verdampfen, Viskosität steigt | Hochtemperatur-Betrieb | Massendurchsatz im Ölsystem sinkt |
| | Überlastung, thermisch | Ölverdünnung durch Wasser-Import ins Ölsystem, Viskosität sinkt | Temperaturzyklierung | Massendurchsatz im Ölsystem steigt |
| | Überlastung, thermisch | Polymerisation von Ölschichten auf Lagern nach Heißabstellern | Heißabsteller, HochlastBetrieb | Reibarbeit steigt, Drehzahl sinkt (z.B. Turbolader) |

Durch kontinuierliche Beobachtung der Observablen am jeweiligen System sowie an Vergleichssystemen einer Vergleichsinstanz und Differenzbildung zwischen dem zeitlichen Verlauf der Observablen am System und dem zeitlichen Verlauf der entsprechenden Observablen an der Vergleichsinstanz kann somit beurteilt werden, ob der jeweilige Schädigungsmechanismus aktiv ist.

Beispielweise kann somit durch Beobachtung der Observablen Öldruck und Vergleich mit der Vergleichsinstanz sowie Abgleich mit dem theoretischen zeitlichen Verlauf, welcher im Rahmen einer Rechnung am Modell bestimmt wurde, ermittelt werden, ob eine Abrasion durch Partikelfracht im Schmieröl als Schädigungseffekt SE aufgrund des Schädigungsmechanismus Erosion bei der Komponente C Gleitlager vorliegt.

Mit dem erfindungsgemäßen Verfahren ist somit auf besonders einfache Weise beurteilbar, ob ein System in Ordnung ist oder ein bestimmter Schädigungsmechanismus wirkt, sodass insbesondere eine Wartung gut geplant und ungeplante Stillstände vermieden werden können, und zwar ohne dass es hierzu erforderlich wäre, einen exakten Sollzustand des Systems im Vorhinein zu kennen. Vielmehr ist es ausreichend, das Verhalten des Systems mit dem Verhalten von äquivalenten Systemen einer Vergleichsinstanz, gegebenenfalls nur mit dem Verhalten eines einzigen Vergleichssystems, zu vergleichen.

## Patentansprüche

1. Verfahren zur Bestimmung eines Zustandes eines technischen Systems (S), wobei ein Verhalten des Systems (S) bei Beaufschlagung mit einer Last gemessen und dieses Verhalten zur Beurteilung eines Zustandes des Systems (S) herangezogen wird, **dadurch gekennzeichnet, dass** ein zeitlicher Verlauf des Verhaltens des Systems (S) und einer Vergleichsinstanz, welche zumindest ein, vorzugsweise mehrere, äquivalente Vergleichssysteme aufweist, gemessen wird, wonach eine Differenz zwischen dem Verhalten des Systems (S) und dem Verhalten der Vergleichsinstanz gebildet wird, wonach anhand der Differenz eine Zustandsbeurteilung des Systems (S) erfolgt.

2. Verfahren nach Anspruch 1, **dadurch gekennzeichnet, dass** die Vergleichsinstanz zumindest ein Vergleichssystem aufweist, welches mit dem System (S) baugleich ist.

3. Verfahren nach Anspruch 1 oder 2, **dadurch gekennzeichnet, dass** die Vergleichsinstanz zumindest ein Vergleichssystem aufweist, welches gleich und synchron wie das System (S) belastet bzw. angesteuert wird.

4. Verfahren nach einem der Ansprüche 1 bis 3, **dadurch gekennzeichnet, dass** die Vergleichsinstanz zumindest ein Vergleichssystem aufweist, welches gleich wie das System (S) und asynchron zum System (S) belastet bzw. angesteuert wird.

5. Verfahren nach einem der Ansprüche 1 bis 4, **dadurch gekennzeichnet, dass** ein digitales Modell des Systems (S) erstellt wird, insbesondere durch Erstellung eines digitalen Zwillings, und das Verhalten des Systems (S) bei Wirkung von Schädigungsmechanismen (SM) durch Simulation am digitalen Modell, insbesondere am digitalen Zwilling, ermittelt wird.

6. Verfahren nach einem der Ansprüche 1 bis 5, **dadurch gekennzeichnet, dass** eine Zustandsbeurteilung erfolgt, indem ein zeitlicher Verlauf der Differenz mit zeitlichen Verläufen von Auswirkungen möglicher Schädigungsmechanismen (SM) abgeglichen und basierend darauf ein wirkender Schädigungsmechanismus (SM) identifiziert wird.

7. Verfahren nach Anspruch 6, **dadurch gekennzeichnet, dass** der zeitliche Verlauf der Differenz mit zeitlichen Verläufen von Auswirkungen von einem oder mehreren der in der folgenden Liste angeführten Schädigungsmechanismen (SM) abgeglichen wird:
- chemische Alterung;
- elektrische Alterung;
- thermische Alterung;
- Kavitation;
- Korrosion, im Sinne von Reaktion eines Werkstoffs mit seiner Umgebung;
- elektrochemische Korrosion;
- Korrosion aufgrund eines heißen Gases;
- Risswachstum in korrosiver Umgebung;
- Kriechen;
- Ablösung;
- Ablagerung;
- Verzug;
- Ermüdung aufgrund von High Cycle Fatigue;
- Ermüdung aufgrund von Low Cycle Fatigue;
- thermomechanische Ermüdung;
- Eisbildung;
- elektrische Überlastung;
- mechanische Überlastung;
- thermische Überlastung;
- Oxidation;
- abrasiver Verschleiß;
- adhäsiver Verschleiß;
- erosiver Verschleiß;
- Verschleiß durch Fretting;
- hydrodynamischer Verschleiß;
- Verschleiß durch Fressen;
- Graufleckigkeit.

8. Verfahren nach Anspruch 7, **dadurch gekennzeichnet, dass** Wahrscheinlichkeiten, mit welchen mögliche Schädigungsmechanismen (SM) bei dem System (S) wirken, analysiert werden und der zeitliche Verlauf der Differenz nur mit zeitlichen Verläufen von Auswirkungen von einem oder mehreren Schädigungsmechanismen (SM) abgeglichen wird, welche mit einer eine vordefinierte Schwellwahrscheinlichkeit überschreitenden Wahrscheinlichkeit wirken.

9. Verfahren nach Anspruch 8, **dadurch gekennzeichnet, dass** in Bezug auf die einzelnen Schädigungsmechanismen (SM) Treiber (T) identifiziert werden und Wahrscheinlichkeiten, mit welchen die einzelnen Schädigungsmechanismen (SM) wirken, anhand erwarteter Intensitäten bzw. Wahrscheinlichkeiten beurteilt werden, mit welcher die Treiber (T) bei einem Betrieb des Systems (S) wirken.

10. Verfahren nach einem der Ansprüche 1 bis 9, **dadurch gekennzeichnet, dass** bei Messung des Verhaltens physikalische Größen des Systems (S) und der Vergleichsinstanz gemessen werden, anhand welcher beurteilbar ist, ob Schädigungsmechanismen (SM) wirken.

11. Verfahren nach Anspruch 10, **dadurch gekennzeichnet, dass** in Bezug auf einzelne Schädigungsmechanismen (SM), insbesondere jene Schädigungsmechanismen (SM), welche mit einer eine vordefinierte Schwellwahrscheinlichkeit überschreitenden Wahrscheinlichkeit auftreten, beobachtbare Indikatoren (O), insbesondere physikalische, messbare Größen, identifiziert werden und diese Indikatoren (O) gemessen werden, um das Verhalten des Systems (S) und der Vergleichsinstanz zu messen.

12. Verfahren nach einem der Ansprüche 1 bis 11, **dadurch gekennzeichnet, dass** anhand der erfolgten Zustandsbeurteilung und einer ermittelten Zustandsveränderung ein zukünftiges Verhalten des Systems (S) prognostiziert wird.

13. Verfahren nach einem der Ansprüche 1 bis 12, **dadurch gekennzeichnet, dass** anhand der erfolgten Zustandsbeurteilung eine Wartung geplant wird.

14. Verfahren zum Warten eines technischen Systems, **dadurch gekennzeichnet, dass** die Wartung basierend auf einem in einem Verfahren nach einem der Ansprüche 1 bis 13 bestimmten Zustand geplant und durchgeführt wird.
